# EUROPEAN PATENT SPECIFICATION

(11) **EP 2 009 887 B1**
(45) Date of publication and mention of the grant of the patent: **04.10.2017**
(21) Application number: 07111406.0
(22) Date of filing: 29.06.2007
(51) Int. Cl.: H04M 3/42

(54) **Call establishment of calls from a remote party to an enterprise-associated mobile device via an enterprise communications system**
Verbindungsaufbau von Anrufen von einem entfernten Teilnehmer zu einem Unternehmens-assoziierten mobilen Gerät über ein Unternehmenskommunikationssystem
Établissement des appels d'un correspondant distant vers un dispositif mobile associé à une entreprise via un système de communication d'entreprise

(43) Date of publication of application: 31.12.2008
(73) Proprietor: BlackBerry Limited, Waterloo, ON N2K 0A7 (CA)
(72) Inventor: Lee, Dalsu, Thornhill, Ontario L4J 7Y8 (CA); George, Richard, Waterloo, Ontario N2T 2S3 (CA); Oliver, Brian, Fergus, Ontario N1M 1C8 (CA)
(74) Representative: Gill Jennings & Every LLP

(56) References cited:
- WO-A-96/22000
- WO-A-2007/040620
- CA-A1- 2 436 946
- DE-A1-102005 046 381
- US-A1- 2006 030 357

## Description

### FIELD

The present application relates to managing calls to or from a mobile device and, in particular, managing calls to or from a mobile device associated with an enterprise.

### BACKGROUND

It is becoming more common for enterprises to provide employees with mobile devices for use in connection with their employment. A mobile device enabled for wireless communication allows the employee to maintain contact with clients, customers, co-workers, etc. The ability to make and receive voice calls using a mobile device allows a user to maintain responsiveness despite being away from his or her desk telephone. If the mobile device is capable of sending and receiving e-mail wirelessly, the user is able to respond quickly to inquiries and address problems while away from his or her desktop computer. Accordingly the use of enterprise-related mobile devices has become commonplace.

Most mobile wireless devices are equipped for wireless voice communication over a Public Land Mobile Network (PLMN), e.g. cellular or PCS network. The use of the mobile device to make or receive wireless voice calls directly with remote parties prevents the enterprise from managing those calls or exercising any control over those calls. For example, certain usage restrictions that may apply to telephone use within the wired enterprise telephone network may not necessarily be applied to calls through the PLMN from the enterprise-related mobile devices.

US 2006/0030357 A1 discloses an IP PBX system that serves enterprise telephones via a landline IP network connection is be expanded to serve cellular wireless communication devices (WCD) via a cellular wireless carrier's radio access network (RAN). Calls to and from the cellular WCD are connected through the cellular carrier's RAN and the IP PBX system, so that the IP PBX system can control and manage the calls just as the IP PBX would control and manage calls involving other extensions on the IP PBX. A cellular WCD thereby becomes an IP PBX client station, i.e., an extension on the IP PBX system. As such, the cellular WCD can seamlessly benefit from many of the same IP PBX features that other more conventional IP PBX client stations (e.g., desk phones) enjoy.

### BRIEF SUMMARY

In one aspect, the present application provides a method of routing a call between an enterprise-associated mobile device and a remote party through an enterprise communications system, as recited in claim 1.

In another aspect, the present application provides a system for enterprise-related call management of an enterprise-associated mobile device, the mobile device being configured for wireless communications over a public land mobile network, as recited in claim 6.

In yet another aspect, the present application provides a computer program product comprising a machine-readable medium having encoded thereon computer-executable instructions for routing a call between an enterprise-associated mobile device and a remote party through an enterprise communications system, as recited in claim 10.

Other aspects of the present application will be apparent to those of ordinary skill in the art from a review of the following detailed description in conjunction with the drawings.

### BRIEF DESCRIPTION OF THE DRAWINGS

Reference will now be made, by way of example, to the accompanying drawings which show example embodiments of the present application, and in which:
Figure 1 shows, in block diagram form, an example system for managing enterprise-related mobile calls;
Figure 2 shows, in block diagram form, further details of the enterprise communications system;
Figure 3 shows a simplified flowchart reflecting an example method of managing an incoming enterprise-related mobile call;
Figure 4 shows a simplified flowchart reflecting an example method of managing an outgoing enterprise-related mobile call;
Figure 5 diagrammatically illustrates a call sequence for placing an outgoing call from an enterprise-related mobile device;
Figure 6 shows a call sequence for receiving an incoming call for an enterprise-related mobile device;
Figure 7 diagrammatically illustrates a call sequence for placing an outgoing call from an enterprise-related mobile device;
Figure 8 shows a call sequence for receiving an incoming call from an enterprise-related mobile device; and
Figures 9 through 14, which contain block diagrams illustrating various embodiments and examples of call management in accordance with the present application.

Similar reference numerals may have been used in different figures to denote similar components.

### DESCRIPTION OF EXAMPLE EMBODIMENTS

Embodiments of the present application are not limited to any particular operating system, mobile device architecture, server architecture, or computer programming language.

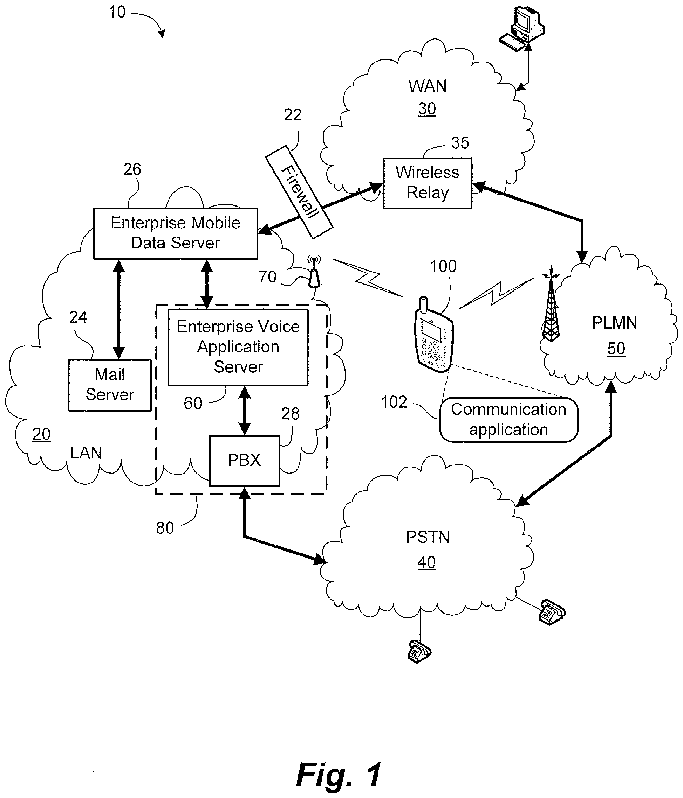

Referring now to the drawings, Figure 1 shows, in block diagram form, an example system 10 for managing enterprise-related mobile calls. The example system 10 includes an enterprise local area network (LAN) 20, which is connected, through a firewall 22, to a wide area network (WAN) 30, such as the Internet. The system 10 also includes a public switched telephone network (PSTN) 40, and a public land mobile network (PLMN) 50, which may also be referred to as a wireless wide area network (WWAN).

A mobile device 100 is associated with the enterprise LAN 20. In some scenarios, the mobile device 100 and the LAN 20 are owned or operated in common by the enterprise. For example, the mobile device 100 may be provided by the enterprise to one of its employees for use in connection with his or her employment.

The mobile device 100 is configured for wireless communication. In particular, the mobile device 100 includes an appropriate radio transceiver and associated software for communicating with the PLMN 50. The mobile device 100 is capable of both wireless voice and data communications via the PLMN 50. In various embodiments, the PLMN 50 and mobile device 100 may be configured to operate in compliance with any one or more of a number of wireless protocols, including GSM, GPRS, CDMA, EDGE, UMTS, EvDO, HSPDA, WiMAX, or a variety of others. It will be appreciated that the mobile device 100 may roam within the PLMN 50 and across PLMNs, in known manner, as the user moves.

The LAN 20 is enterprise-specific and typically includes a number of networked servers, computers, and other devices (not shown). The LAN 20 includes one or more mail servers, such as mail server 24, for coordinating the transmission, storage, and receipt of electronic messages for client devices operating within the LAN 20. Typical mail servers include the Microsoft Exchange Server™ and the IBM Lotus Domino™ server. Each user within the enterprise typically has at least one user account within the LAN 20. Associated with each user account is message address information, such as an e-mail address. Messages addressed to a user message address are stored on the LAN 20 in the mail server 24. The messages may be retrieved by the user using a messaging application, such as an e-mail client application. The messaging application may be operating on a user's computer connected to the LAN 20 within the enterprise. In some embodiments, the user may be permitted to access stored messages using a remote computer, for example at another location via the WAN 30 using a VPN connection. Using the messaging application, the user may also compose and send messages addressed to others, within or outside the LAN 20. The messaging application causes the mail server 24 to send a composed message to the addressee, often via the WAN 30.

The system 10 further includes a wireless relay 35 that serves to route messages received over the PLMN 50 from the mobile device 100 to the corresponding enterprise LAN 20. The wireless relay 35 also routes messages from the enterprise LAN 20 to the mobile device 100 via the PLMN 50. The wireless relay 35 is shown, in this embodiment, located with the WAN 30.

The LAN 20 also includes an enterprise mobile data server 26. Together with the wireless relay 35, the enterprise mobile data server 26 functions to redirect or relay incoming e-mail messages addressed to a user's e-mail address within the LAN 20 to the user's mobile device 100 and to relay incoming e-mail messages composed and sent via the mobile device 100 out to the intended recipients within the WAN 30 or elsewhere. The enterprise mobile data server 26 and wireless relay 35 together facilitate "push" e-mail service for the mobile device 100 enabling the user to send and receive e-mail messages using the mobile device 100 as though the user were connected to an e-mail client within the LAN 20 using the user's enterprise-related e-mail address.

As is typical in many enterprises, the LAN 20 includes a Private Branch eXchange (PBX) 28 having a connection with the PSTN 40 for routing incoming and outgoing voice calls for the enterprise. On one side, the PBX 28 is connected to the PSTN 40, for example, via direct inward dialing (DID) trunks. The PBX 28 may use ISDN signaling protocols for establishing and breaking circuit-switched connections through the PSTN 40 and related signaling and communications. On its other side, the PBX 28 connects to the LAN 20 and, through the LAN 20, to telephone terminal devices (not shown) such as conventional desk sets, softphones, etc. Within the enterprise, each individual may have an associated extension number or direct dial phone number. Calls outgoing from the PBX 28 to the PSTN 40 or incoming from the PSTN 40 to the PBX 28 are typically digital circuit-switched calls. Within the enterprise, *i.e.* between the PBX 28 and terminal devices, calls are typically digital packet-switched calls. In some embodiments, calls over the LAN 20 are VoIP calls. The PBX 28 implements the switching to connect legs and provides the conversion between a circuit-switched call and a packet-switched call. In many embodiments, the PBX 28 provides a number of additional functions including automated attendant, interactive voice response, call forwarding, voice mail, etc. It may also implement certain usage restrictions on enterprise users, such as blocking international calls or premium-rate telephone calls.

The LAN 20 may also provide one or more wireless access points 70. The wireless access points 70 provide wireless local area network (WLAN) connectivity to mobile devices 100 within the enterprise campus. The wireless access points 70 may be configured in accordance with one of the IEEE 802.11 specifications. The mobile device 100 may be equipped with a suitable antenna, RF transceiver, and software for accessing and using the WLAN connectivity of the wireless access point 70, *i.e.* the mobile device 100 may be "Wi-Fi enabled". In this manner the mobile device 100 may establish an IP connection with the LAN 20 enabling relatively fast data communication.

It will be appreciated that a typical mobile device 100 with wireless connectivity to the PLMN 50 is capable of placing a user-dialed wireless voice call to a remote party. The remote party may be a remote mobile device located elsewhere in the PLMN 50 or another wireless network. The remote party may be a conventional telephone terminal device connected to the PSTN 40 and, in some instances, through a remote PBX. It will also be appreciated that the remote party may be reachable through a combination of these networks. Conversely, remote parties may dial the mobile device 100 and the call will be routed to the mobile device 100 via the PLMN 50.

When the user directly dials a remote party from the mobile device 100, the call is routed by the PLMN 50 and/or PSTN 40 based on the phone number of the dialed party and applicable call routing conventions or protocols. The mobile device 100 owner (typically the enterprise) often incurs wireless charges, especially if the call is a long-distance call. Many enterprises wish to monitor the activity of the users of their mobile devices in placing such calls so as to ensure that the calls are legitimately related to business activities and not for personal use. In some cases, the enterprise may wish to prevent certain calls from being placed or otherwise implement usage policies.

To provide for management of enterprise-related mobile calls, the LAN 20 includes a enterprise voice application server 60. The enterprise voice application server 60, together with the configuration of the mobile device 100, ensure that voice calls to or from the mobile device 100 are routed through the enterprise facilities. The mobile device 100 includes a communication application 102, which may include a phone application or other voice-based communication application, for placing and/or receiving cellular and/or VoIP voice calls.

The enterprise voice application server 60 is shown as a distinct server in Figure 1; however, in one embodiment, the enterprise voice application server 60 and enterprise mobile data server 26 may be implemented on a common server platform. In another embodiment, the functions and operations of the enterprise voice application server 60 may be implemented as within the PBX 28. Other possibilities will also be appreciated.

The enterprise voice application server 60 and PBX 28 may collectively be referred to as the enterprise communications system 80 in some of the example embodiments discussed herein.

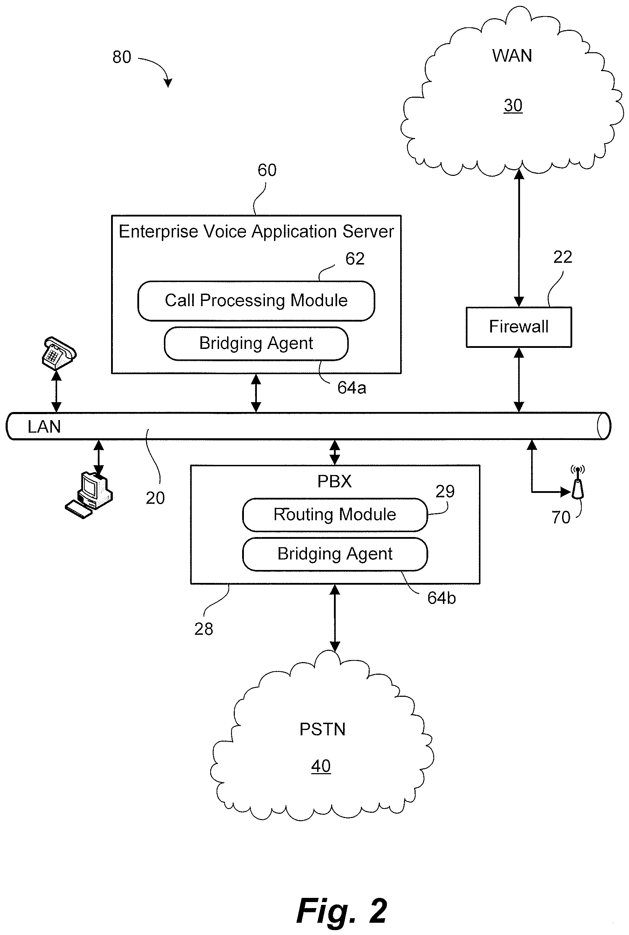

Reference is now made to Figure 2, which shows, in block diagram form, further details of the enterprise communications system 80. The PBX 28 may include a routing module 29 for determining where and how to route incoming or outgoing calls.

The enterprise voice application server 60 includes a call processing module 62. The call processing module 62 allows the enterprise voice application server 60 to send and receive call set-up or management messages to and from the mobile device 100 and/or the PBX 28. In one embodiment, the messages may comprise Session Initiation Protocol (SIP) messages, although the present application is not limited to implementations involving SIP. The call processing module 62 may be configured to send and receive messages via a WLAN connection with the mobile device 100 through the access point 70, if such a connection is available. In the absence of a WLAN connection, the call processing module 62 may be configured to send and receive data messages via the WAN 30 and PLMN 50, *i.e.* through the enterprise mobile data server 26 and wireless relay 35. In yet other embodiments, the call processing module 62 may be configured to send data messages to the mobile device 100 through the PBX 28, for example as SMS messages.

The enterprise communications system 80 includes a bridging agent 64 (shown individually as 64a and 64b) for bridging or connecting two calls together at the enterprise communications system 80. In some embodiments, the bridging agent 64a is implemented within the enterprise voice application server 60. In some embodiments the bridging agent 64b is implemented within the PBX 28. In yet other embodiments, both the bridging agents 64a and 64b may be present. As will be described further below, a first call from a remote party routed through the PBX 28 may be terminated at the enterprise communications system 80, and a second call from the mobile device 100 may also be terminated at the enterprise communications system 80. The bridging agent 64 enables the enterprise communications system 80 to connect the two calls so as to connect the mobile device 100 to the remote party. In some embodiments, the second call may be a circuit-switched call or a VoIP call. It may be routed from the mobile device 100 to the enterprise communications system 80 through the PLMN 50 and PSTN 40, or through the WLAN connection via the access point 70, or through the PLMN 50 and WAN 30 via the wireless relay 35 and/or enterprise mobile data server 26. Some of these possibilities are discussed in greater detail below.

It will be appreciated that the call processing module 62 and bridging agent 64 may be implemented mainly by way of suitably programmed software components executed by one or more processors within the enterprise communications system 80.

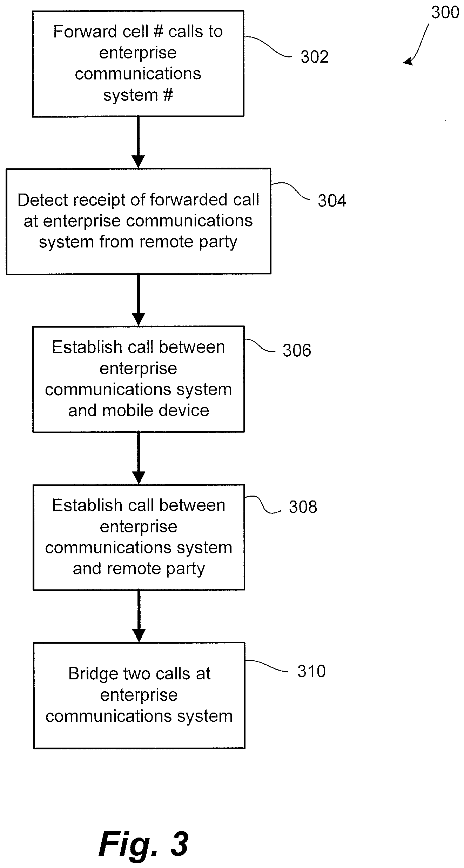

Reference is now made to Figure 3, which shows a simplified flowchart reflecting an example method 300 of managing an incoming enterprise-related mobile call in accordance with the present application. The method 300 begins with setting or configuring the mobile device 100 and/or PLMN 50 to forward all calls addressed to the mobile device's wireless phone number to an enterprise phone number. In some embodiments, the enterprise phone number to which calls are forwarded is the user's direct dial extension number within the enterprise. In some embodiments, the enterprise phone number is the general enterprise phone number that would otherwise be used to reach the PBX 28. In yet other embodiments, the enterprise phone number is a dedicated phone number for the PBX 28 intended only for the purpose of implementing the present mobile call management function, in which case it may be considered a direct dial extension for the enterprise voice application server 60.

It will be appreciated that the function of call forwarding is typically implemented within the PLMN 50. In practice, the mobile device 100, or an administrator with appropriate privileges, instructs the PLMN 50 to forward all calls for the mobile device 100 wireless phone number to the enterprise phone number. This call forwarding information is stored within memory in the PLMN 50 in known manner and any calls (or, more particularly, call requests) received by the PLMN 50 are redirected to the enterprise phone number. In many mobile devices the user may cancel call forwarding; however, in the present embodiment the call forwarding is not user-configurable. In other words the communications application 102 is configured to prevent user alteration or cancellation of the call forwarding command without, for example, administrator-level privileges. The call forwarding operation may be set by an enterprise administrator before the mobile device 100 is given to the enterprise employee. In some embodiments, the enterprise administrator may be able to set the call forwarding operation from a remote location by sending a suitable instruction or command to the PLMN 50 without the necessity of accessing the PLMN 50 through the mobile device 100 itself.

In step 304, the enterprise communications system 80 recognizes receipt of an incoming call request from the PSTN 40 as a forwarded call. The routing or header information with the call request indicates that the call was originally directed or addressed to the mobile device 100 and that the call was forwarded to the enterprise communications system 80. The enterprise communications system 80 is configured to recognize the forwarded call as being related to an enterprise-associated mobile phone, perhaps using a look-up table or such information in another form.

In step 306, the enterprise communications system 80 establishes a call between itself and the mobile device 100. This step includes "ringing" the mobile device 100 and, if the user answers, establishing the call. A number of signaling mechanisms may be used to set up the call, as will be described below. In one embodiment, the call between the enterprise communications system 80 and the mobile device 100 is established as a VoIP call running over RTP atop the IP connection the mobile device 100 has with the access point 70. Any suitable VoIP session set-up protocol may be employed to establish the VoIP call, such as SIP signaling. For example, the enterprise communications system 80 may send a SIP INVITE message to the mobile device 100 and, if the user chooses to accept the call, the mobile device 100 responds with a SIP 200 OK message, etc.

In another embodiment, the call is established as a regular circuit-switched call from the mobile device 100 through PLMN 50 and PSTN 40 to the enterprise communications system 80. It will be appreciated that since the mobile device 100 has call forwarding configured to prevent any incoming calls, the enterprise communications system 80 rings the mobile device 100 by sending a data message regarding the incoming call request received by the enterprise communications system 80. The mobile device 100, and in particular the communication application 102, alerts the user by ringing, vibrating, or otherwise, depending on how the mobile device 100 is configured to alert the user to incoming call requests. If the user chooses to answer or accept the call, then the mobile device 100 places an outgoing wireless voice call via the PLMN 50 to the enterprise communications system 80. The phone number automatically dialed by the mobile device 100 may be predetermined phone number for the enterprise communications system 80. It may or may not be the same as the enterprise phone number to which calls to the mobile device 100 are forwarded. In any event, the enterprise communications system 80 recognizes the incoming call as originating from the enterprise-related mobile device 100 and the call is answered to complete a connection between the mobile device 100 and the enterprise communications system 80.

It will be appreciated that in some embodiments a VoIP call may also be established between the enterprise communications system 80 and the mobile device 100 via the WAN 30 and PLMN 50, provided that the mobile device 100 and PLMN 50 permit assignment of an IP address and provisioning of an IP connection to the mobile device 100. However, in some embodiments the delays inherent in operation of the enterprise mobile data server 26 and wireless relay 35 make real-time services such as VoIP between the LAN 20 and the mobile device 100 impractical over such a connection. Nevertheless, in some embodiments a suitable configuration that enables a connection with sufficient end-to-end QoS to support VoIP may be established.

Referring still to Figure 3, in step 308, based on the mobile device 100 user's acceptance of the call, the enterprise communications system 80 accepts the incoming call request from the remote party that had been received in step 304. Thus a call is established between the enterprise communications system 80 and the remote party. The enterprise communications system 80 now terminates two calls: one with the mobile device 100 and one with the remote party.

In step 310, the enterprise communications system 80, and in particular the bridging agent 64, bridges the two calls together to connect the mobile device 100 to the remote party.

In this manner, an incoming call to the mobile device 100 is routed through the enterprise communications system 80, which allows the enterprise communications system 80 to impose usage policies and track calls.

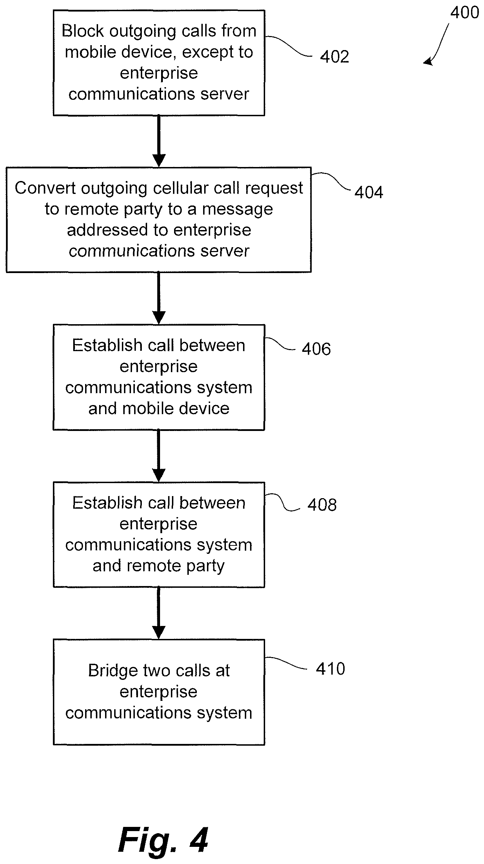

Reference is now made to Figure 4, which shows a simplified flowchart reflecting an example method 400 of managing an outgoing enterprise-related mobile call in accordance with the present application. The method 400 begins in step 402 with the "blocking" or prevention of any direct outgoing calls from the mobile device 100. In practice, the configuration may be to prevent the mobile device 100 from placing calls other than to the enterprise communications system 80. As will be appreciated from the foregoing discussion in relation to Figure 3, the mobile device 100 must be able to place a call to the enterprise communications system 80 via the PLMN 50 in order to receive a call. Accordingly, in many embodiments, step 402 comprises configuring the mobile device 100 to prevent outgoing calls from being dialed through the PLMN 50 unless they are addressed to the enterprise communications system 80 or to an emergency number, e.g. E911.

When the user requests a call to a remote party, e.g. dials a phone number, selects a speed dial option, etc., the communication application 102 on the mobile device 100 does not send a conventional cellular call request to the PLMN 50. Instead, as reflected in step 404, the mobile device 100 transmits a data message addressed to the enterprise communications system 80. The message may be sent through any data transmission path, including a WLAN connection via the access point 70, if any, or through the PLMN 50 and WAN 30. In some embodiments, the data message may be a SIP message. The data message may be transmitted via a data messaging function of the PLMN 50, such as an SMS message. Other possibilities will be understood by those skilled in the art.

The data message informs the enterprise communications system 80 of the mobile device 100 user's request to contact a remote party, and includes the remote party phone number. Then, in step 406, the mobile device 100 automatically calls the enterprise communications system 80. Meanwhile, in step 408, the enterprise communications system 80 places a call to the remote party via the PSTN 40. If the remote party answers, the call between the remote party and the enterprise communications system 80 is established, and the enterprise communications system 80 answers the incoming call from the mobile device 100, thereby establishing the call between the mobile device 100 and the enterprise communications system 80. In step 410, the two calls are bridged together at the enterprise communications system 80.

Referring again to step 406, the enterprise communications system 80 may send the mobile device 100 a message instructing the mobile device 100 call the enterprise communications system 80, in response to which the mobile device 100 places the automatic call to the enterprise communications system 80. The message may, in some embodiments, simply be an acknowledgement message in reply to the call request message from the mobile device 100 indicated in step 404. In some embodiments, the mobile device 100 places its the call to the enterprise communications system 80 via the PLMN 50 and PSTN 40 as a circuit-switched cellular call. In some embodiments, the mobile device 100 places the call to the enterprise communications system 80 as a VoIP call over the WLAN connection. In one embodiment, if a WLAN connection is available, the call between the mobile device 100 and the enterprise communications system 80 may be initiated by the enterprise communications system 80, since the call forwarding operation will not affect VoIP calls thereby enabling the enterprise communications system 80 to initiate the call with the mobile device 100. In some embodiments, SIP signaling may be used in the set-up of VoIP calls.

It will be appreciated that step 408 may be performed somewhat contemporaneously with step 406. For example, while the enterprise communications system 80 is awaiting an acceptance from the remote party, the enterprise communications system 80 may refrain from accepting the call from the mobile device 100 until acceptance of the other call from the remote party is received. Once the remote party answers the first call, then the enterprise communications system 80 may automatically answer the second call (from the mobile device 100), and then, in step 410, bridges the two calls together.

In this manner, any outgoing calls from the mobile device 100 are routed through the enterprise communications system 80. Accordingly, the enterprise may monitor call duration and manage usage restrictions. This has the added feature of making the call appear as though it were coming from the enterprise. In fact, the enterprise communications system 80 may be configured to have the call appear as through it originates from the user's extension number.

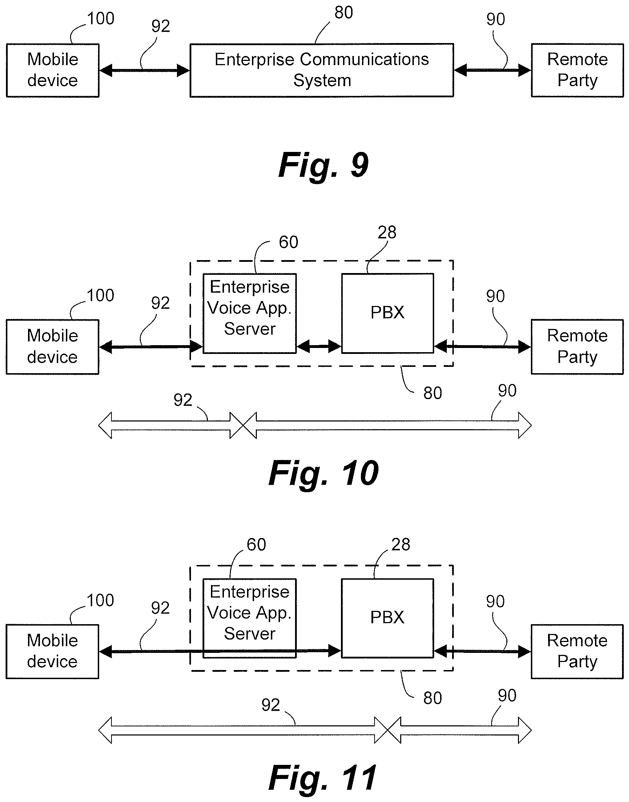

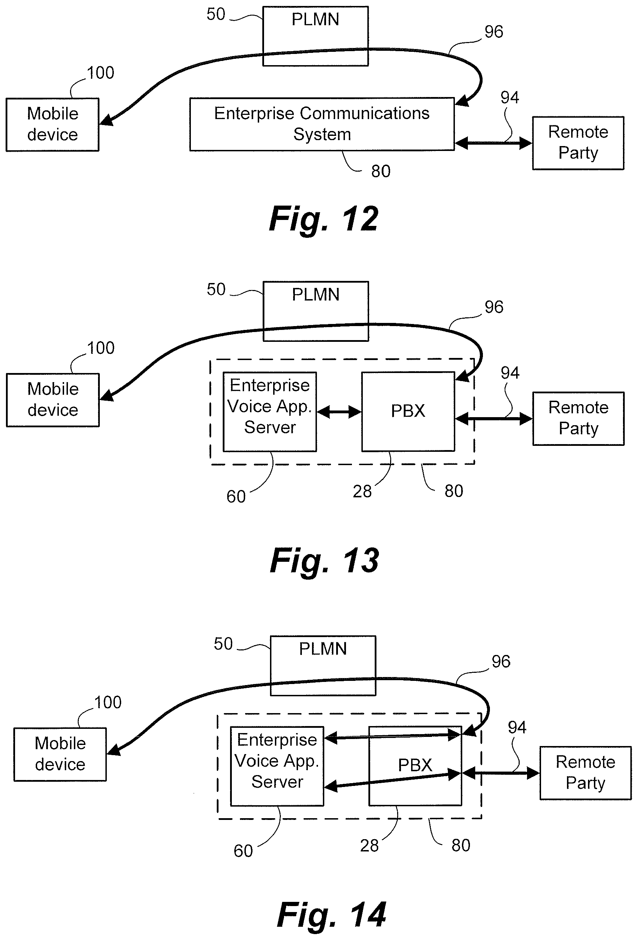

Reference is now made to Figures 9 through 14, which contain block diagrams illustrating various embodiments and examples of call management in accordance with the present application. Figures 9 through 11 illustrate embodiments in which a suitable IP connection is present between the mobile device 100 and the enterprise communications system 80 to permit a VoIP call. Figures 12 through 14 illustrate embodiments in which there is no IP connection or no suitable IP connection between the mobile device 100 and the enterprise communications system 80 to support a VoIP call.

Figure 9 shows a generalized block diagram of an example call management architecture. In this example, the enterprise communication system 80 establishes a first call 90 with the remote party over a circuit-switched connection through the PSTN. A second call 92 is established by the enterprise communication system 80 with the mobile device 100 as a VoIP call over a suitable IP connection. The enterprise communication system 80 bridges the first call 90 and the second call 92 to connect the mobile device 100 with the remote party.

Figure 10 shows a block diagram of an embodiment of the example call management architecture. In this embodiment, the enterprise communication system 80 includes the PBX 28 and the enterprise voice application server 60 as distinct entities. Calls between the PBX 28 and enterprise voice application server 60 may employ VoIP. In this embodiment, the first call 90 and second call 80 are both terminated at the enterprise voice application server 60. Accordingly, the first call 90 is composed of the circuit-switched leg from the PBX 28 to the remote party and the VoIP leg from the PBX 28 to the enterprise voice application server 60. The interface between the VoIP leg and the circuit-switched leg is managed by the PBX 28 in known manner. In this embodiment, the bridging of the first call 90 and the second call 92 occurs in the enterprise voice application server 60.

Figure 11 shows a block diagram of a second embodiment of the example call management architecture. In this embodiment, the first call 90 and the second call 92 are both terminated at the PBX 28. The second call 92 comprises a VoIP call from the mobile device 100 to the PBX 28 passing through the enterprise voice application server 60. In one embodiment, this VoIP call may be set-up using two separate VoIP dialogs to create two VoIP calls, one between the mobile device 100 and the enterprise voice application server 60 and the other between the enterprise voice application server 60 and the PBX 28. In another embodiment, the VoIP is created using a single dialog to set-up a single call between the PBX 28 and the mobile device 100. Various mechanisms may be used to ensure that the set-up communications (*e.g.* SIP messaging) and the media path (*e.g.* RTP path) are routed through the enterprise voice application server 60. In the embodiment shown in Figure 11, the bridging of the first call 90 and the second call 92 occurs at the PBX 28.

Figure 12 shows a generalized block diagram of another example call management architecture. In this example, the enterprise communication system 80 establishes both a first call 94 with the remote party over a circuit-switched connection through the PSTN and a second call 96 with the mobile device over a circuit-switched connection through the PSTN. The enterprise communication system 80 bridges the first call 94 and the second call 96 to connect the mobile device 100 with the remote party.

Figure 13 shows a block diagram of an embodiment of the example call management architecture from Figure 12. In this embodiment, the enterprise communication system 80 includes the PBX 28 and the enterprise voice application server 60 as distinct entities. In this embodiment, the first call 94 and the second call 96 are terminated at the PBX 28, where they are bridged together. The enterprise voice application server 60 performs a management role in instructing the PBX 28 on the setting up, tearing down, and bridging of the calls using appropriate signaling and messaging.

Figure 14, shows a block diagram of another embodiment of the example call management architecture from Figure 12. In this embodiment, the first call 94 and second call 96 are terminated by the enterprise voice application server 60. The enterprise voice application server 60 may include a media server component for terminating and bridging the calls 94 and 96. The first call 94 may include the circuit-switched leg from the PBX 28 to the remote party and a VoIP leg between the PBX 28 and the enterprise voice application server 60. Similarly, the second call 96 may include a circuit-switched leg from the PBX 28 to the mobile device 100 and a VoIP leg from the PBX 28 to the enterprise voice application server 60.

Various example sequence diagrams are now presented to illustrate example embodiments of messaging processes for incoming and outgoing enterprise-related mobile calls. It will be appreciated that the sequence diagrams that follow do not necessary illustrate all the messaging and signaling that may occur. For example, for clarity and brevity the diagrams and discussion below do not necessarily show the 100 TRYING messages or the 180 RINGING messages normally used in SIP invite dialogs, but those skilled in the art will understand that these messages may be present in implementations.

In addition, in the diagrams discussed below the enterprise voice application server 60 and PBX 28 are shown as distinct entities. In many cases, the described signaling presumes the establishment of a VoIP call leg between the enterprise voice application server 60 and the PBX 28 and the bridging of calls at the enterprise voice application server 60. As described above in connection with Figure 9 through 14, this VoIP leg may or may not be present and the bridging may occur at the PBX 28. Suitable modifications to the signaling to accommodate different embodiments will be apparent to those skilled in the art in light of the present disclosure.

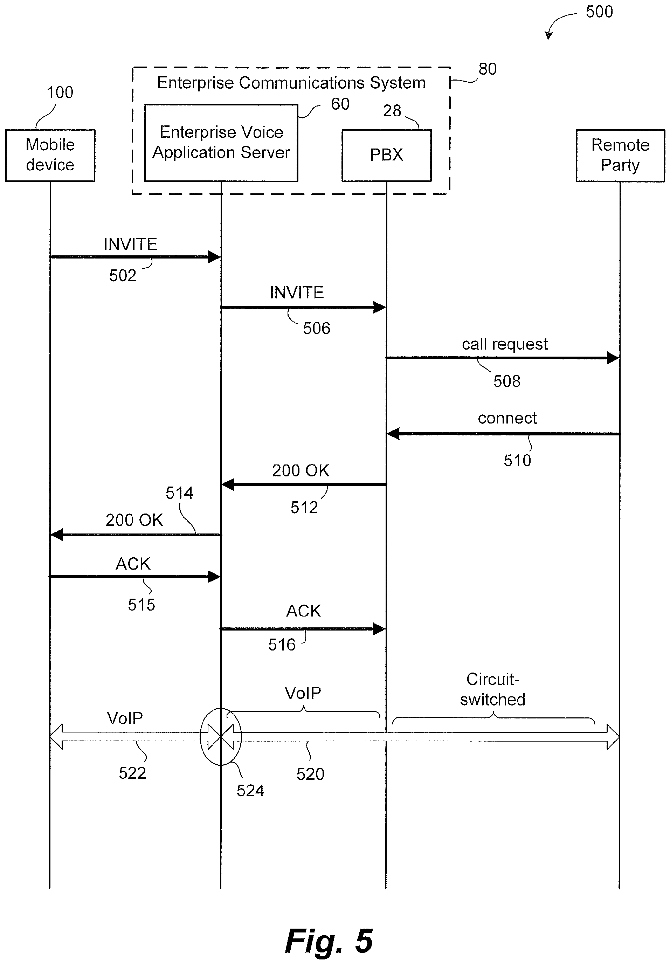

Reference is first made to Figure 5, which diagrammatically illustrates a call sequence 500 for placing an outgoing call from an enterprise-related mobile device. This example presumes a suitable IP connection is available for establishing a VoIP call between the mobile device 100 and the enterprise voice application server 60. This example also presumes that the enterprise voice application server 60 acts as a "back-to-back" user agent. In other words, that the enterprise voice application server 60 terminates both the VoIP calls, as will be described below. Variations will be apparent to those skilled in the art.

The sequence 500 begins when the user of the mobile device 100 attempts to place a call to a remote party, for example by dialing the remote party's telephone number. In response to the user request, the mobile device 100 transmits a call request message 502 to the enterprise voice application server 60. The call request message 502 includes the phone number of the remote party. In a SIP-compliant embodiment, the call request message 502 may comprise a SIP INVITE message. It will be appreciated that call set-up signaling other than SIP may be used in some embodiments.

The enterprise voice application server 60 sends an outgoing call request to the remote party via the PBX 28. As indicated above, in some embodiments, this includes generating and sending a SIP INVITE message 506 addressed to the PBX 28, whereupon the PBX 28 generates and sends an outgoing circuit-switched call request 508 addressed to the remote party.

If the remote party answers the call, a connect message 510 or signal is received by the PBX 28, which then accepts the invite from the enterprise voice application server 60 with a 200 OK message 512. The enterprise voice application server 60 then accepts the invite from the mobile device 100 with its own 200 OK message 514. An ACK message 515 from the mobile device 100 to the enterprise voice application server 60 completes the VoIP call set-up for the path 522 between the mobile device 100 and the enterprise voice application server 60. An ACK message 516 from the enterprise voice application server 60 to the PBX 28 completes the VoIP call set-up for the path 520 between the enterprise voice application server 60 and the PBX 28.

The enterprise voice application server 60 then bridges the two VoIP calls together to connect the mobile device 100 to the remote party, as indicted by reference numeral 524.

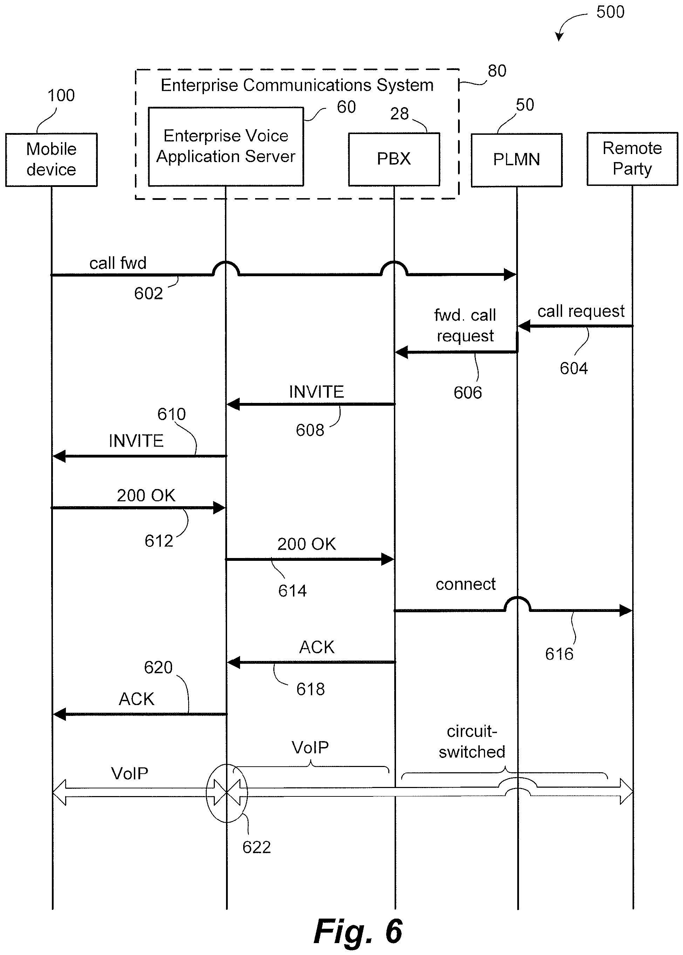

Reference is now made to Figure 6, which shows a call sequence 600 for receiving an incoming call for an enterprise-related mobile device. As with Figure 5, this example presumes a suitable IP connection is available for establishing a VoIP call between the mobile device 100 and the enterprise voice application server 60.

The sequence 600 begins with a call forwarding instruction 602 to the PLMN 50. The call forwarding instruction 602 is shown as originating from the mobile device 100; however, it will be appreciated that the instruction may originate with a system administrator within the enterprise. In many embodiments, the user of the mobile device 100 is not afforded the authority to alter or cancel the call forwarding instruction 602. The mobile device 100 may be configured to prevent the user from adjusting call forwarding.

The PLMN 50 receives an incoming call request signal 604 originated by a remote party. It will be appreciated that the incoming call request signal 604 may be routed through a number of other networks, such as the PSTN (not shown), depending on the location of the mobile device 100 and the location of the remote party.

The PLMN 50 forwards the call request to the PBX 28, or more particularly, to an enterprise telephone number that resolves to the PBX 28 via the PSTN (not shown). The PBX 28 passes the forwarded call request 606 to the enterprise voice application server 60. In some embodiments, this may include composing and sending a SIP INVITE message 608 to the enterprise voice application server 60. The PBX 28 may detect the fact that the call request is forwarded by the PLMN 50 and that it relates to an enterprise-related mobile device number, and its message to the enterprise voice application server 60 may be formed accordingly. For example, in one embodiment, the SIP INVITE message 608 may be addressed to the mobile device 100, although routed through the enterprise voice application server 60. The invite to the mobile device 100 may be routed through the enterprise voice application server 60 as result of a pre-configuration within the PBX 28, a Path command in the course of registration as described in RFC 3327, or any other such mechanism applicable to a specific embodiment.

In another embodiment, the enterprise number to which the call request is forwarded is specific to the enterprise voice application server 60, and the PBX 28 passes through the forwarded call request 606 as the SIP INVITE message 608 addressed to the enterprise voice application server 60. The SIP INVITE message 608 includes sufficient information from the forwarded call request 606 for the enterprise voice application server 60 itself to identify the forwarded call request 606 as having being addressed to an enterprise-related mobile device.

After receiving the SIP INVITE message 608 from the PBX 28, the enterprise voice application server 60 sends a SIP INVITE message 610 to the mobile device 100. The SIP INVITE message 610 may identify the remote party, if that information is available to the enterprise voice application server 60. If the user accepts the incoming call on his or her mobile device 100, *i.e.* answers the call, the mobile device 100 transmits an acceptance message, such as a SIP 200 OK message 612 to the enterprise voice application server 60. The enterprise voice application server 60 then sends a SIP 200 OK message 614 to the PBX 28. The PBX 28 then answers the call request from the remote party using the appropriate signaling 616 to connect the circuit-switched call.

The PBX 28 also responds to the 200 OK message 614 by transmitting a SIP ACK message 618 to the enterprise voice application server 60 to start the VoIP call between the PBX 28 and the enterprise voice application server 60. The enterprise voice application server 60 transmits an ACK message 620 to the mobile device 100 to start that leg of the VoIP call. The enterprise voice application server 60 then bridges the two VoIP calls to connect the mobile device 100 with the remote party, as indicated with reference numeral 622.

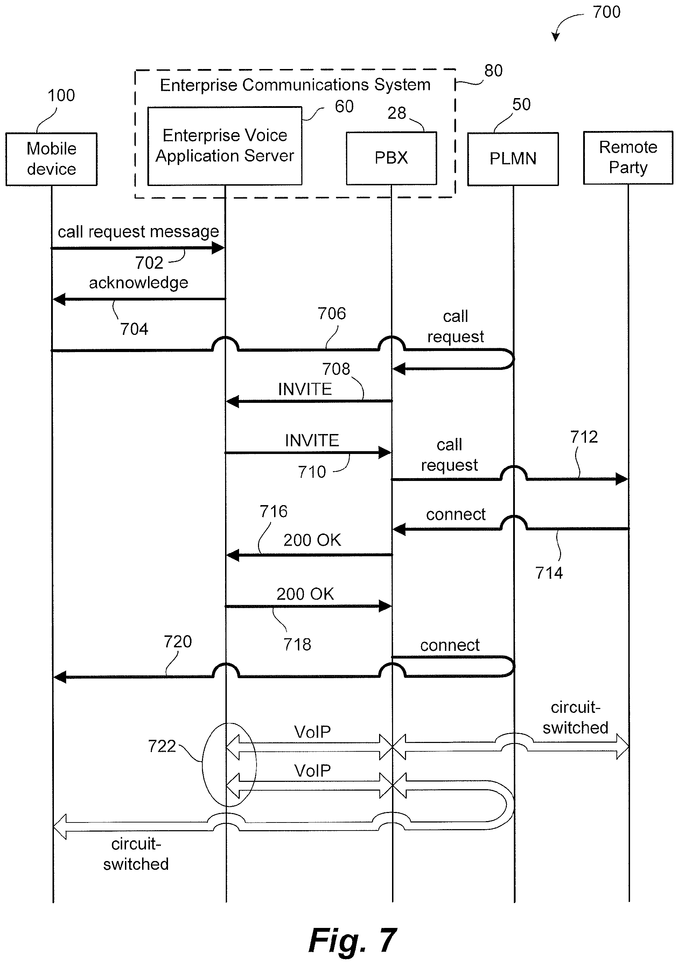

Reference is now made to Figure 7, which diagrammatically illustrates a call sequence 700 for placing an outgoing call from an enterprise-related mobile device. In this example, no IP connection with the mobile device 100 exists that can support a VoIP call.

The sequence 700 begins when the user of the mobile device 100 attempts to place a call to a remote party, for example by dialing the remote party's telephone number. The mobile device 100 is preconfigured to prevent the user from directly dialing a remote party through the PLMN 50, so the mobile device 100 does not send the dialed number to the PLMN 50 in a call request. Instead, in response to the user request, the mobile device 100 transmits a call request message 702 to the enterprise voice application server 60. The call request message 702 includes the phone number of the remote party. The call request message 702 may be sent over any suitable data communications connection, such as through the PLMN 50. The enterprise voice application server 60 may send the mobile device 100 an acknowledgement message 704 acknowledging receipt of the call request message 702.

The mobile device 100 then automatically places a voice call request 706 to the enterprise voice application server 60 via the PLMN 50. The voice call request 706 is received by the PBX 28. The enterprise voice application server 60 is notified of the voice call request 706 in one manner or another. For example, in the present embodiment, the PBX 28 sends the enterprise voice application server 60 a SIP INVITE message 708 based on the call request from the mobile device 100. In other embodiments, other messaging may be used.

Based on the call request message 702 received from the mobile device 100, the enterprise voice application server 60 is aware that the mobile device 100 wishes to connect with the remote party. Accordingly, the enterprise voice application server 60 sends a SIP INVITE message 710 to the PBX 28 addressed to the remote party. The PBX 28 sends a corresponding call request 712 to the remote party via the PSTN (not shown). The SIP INVITE message 710 may be structured by the enterprise voice application server 60 so as to appear to the remote party as though it comes from the mobile device user's enterprise telephone number, in terms of caller ID and such features.

If the remote party chooses to answer the call request 712, the PBX 28 receives an acceptance message or signal, here referred to as a connect signal 714. The PBX 28 then sends a SIP 200 OK message 716 to the enterprise voice application server 60 to accept the SIP INVITE message 710. The enterprise voice application server 60 sends the PBX 28 an ACK message (not shown) to complete the VoIP call between the enterprise voice application server 60 and the PBX 28, thereby connecting the enterprise voice application server 60 to the remote party in one call.

The enterprise voice application server 60 also sends a 200 OK message 718 to the PBX 28 in reply to the SIP INVITE message 708 received with regard to the incoming call from the mobile device 100. An ACK message (not shown) completes the second VoIP call between the enterprise voice application server 60 and the PBX 28, however this second VoIP call is connected at the PBX 28 to the circuit-switched incoming call from the mobile device 100. The PBX 28 answers the call request 706 received from the mobile device 100 with a connect signal 720 in order to complete the call connection between the enterprise voice application server 60 and the mobile device 100.

The enterprise voice application server 60 now has two separate active calls routed through the PBX 28: one with the mobile device 100 and one with the remote party. The enterprise voice application server 60 then bridges the two calls together, as indicated by reference number 722.

In another embodiment (not illustrated), the calls are terminated at the PBX 28 and are not routed through to the enterprise voice application server 60. Accordingly, the bridging of the two calls occurs at the PBX 28. In this embodiment, the enterprise voice application server 60 continues to manage the set-up and tear down of the calls and sends messages/signals to the PBX 28 instructing the PBX 28 to take particular actions, but the enterprise voice application server 60 does not actually handle the media streams.

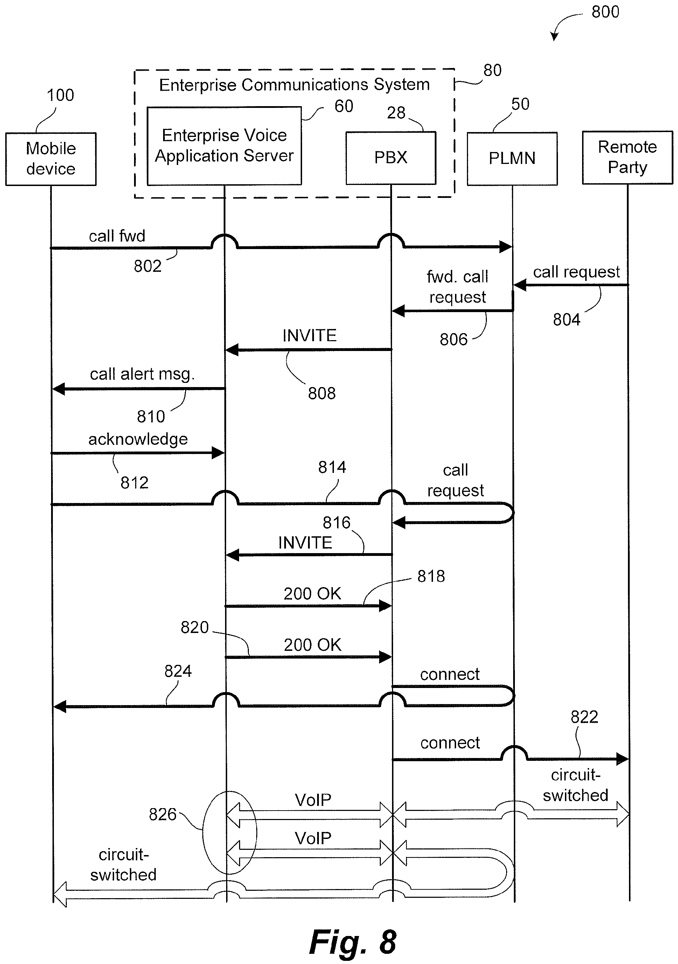

Figure 8 shows a call sequence 800 for receiving an incoming call from an enterprise-related mobile device. In this example, no IP connection with the mobile device 100 exists that can support a VoIP call.

The sequence 800 begins with a call forwarding instruction 802 to the PLMN 50. The call forwarding instruction 802 is shown as originating from the mobile device 100; however, it will be appreciated that the instruction may originate with a system administrator within the enterprise. In many embodiments, the user of the mobile device 100 is not afforded the authority to alter or cancel the call forwarding instruction 802. The mobile device 100 may be configured to prevent the user from adjusting call forwarding.

The PLMN 50 receives an incoming call request signal 804 originated by a remote party. It will be appreciated that the incoming call request signal 804 may be routed through a number of other networks, such as the PSTN (not shown), depending on the location of the mobile device 100 and the location of the remote party.

The PLMN 50 forwards the call request to the PBX 28, or more particularly, to an enterprise telephone number that resolves to the PBX 28 via the PSTN (not shown). The PBX 28 passes the forwarded call request 806 to the enterprise voice application server 60. In some embodiments, this may include composing and sending a SIP INVITE message 808 to the enterprise voice application server 60. The PBX 28 may detect the fact that the call request is forwarded by the PLMN 50 and that it relates to an enterprise-related mobile device number, and its message to the enterprise voice application server 60 may be formed accordingly. For example, the SIP INVITE message 808 may include sufficient information from the forwarded call request 806 for the enterprise voice application server 60 itself to identify the forwarded call request 806 as having being addressed to an enterprise-related mobile device.

In response to the SIP INVITE message 808, which the enterprise voice application server 60 identifies as resulting from a redirected call request originally addressed to an enterprise-related mobile device, the enterprise voice application server 60 generates and sends a call alert message 810 to the mobile device 100. The call alert message 810 may take the form of any suitable data message for informing the mobile device 100 of the incoming call request from the remote party. An acknowledgement or ringing message 812 may be returned to the enterprise calls server 60, in some embodiments. The mobile device 100, and in particular the communication application 102 (Fig. 1), is configured for receiving the call alert message 810 and notifying the user of the requested call, for example using ringtones, vibrations, visual displays, or combinations of such alert mechanisms. If the user accepts the incoming call, then the mobile device 100 automatically places an outgoing voice call 814 to the PBX 28 via the PLMN 60. As indicated previously, the mobile device 100 is preconfigured to prevent any outgoing voice calls via the PLMN 50 unless those calls are addressed to the PBX 28.

The outgoing voice call 814 from the mobile device 100 is received by the PBX 28 via the PLMN 50 and PSTN (not shown). The PBX 28 then generates and sends the enterprise voice application server 60 a SIP INVITE message 816 with regard to the incoming call from the mobile device 100, which the enterprise voice application server 60 may treat as acceptance of the call request from the remote party. Accordingly, the enterprise voice application server 60 sends a SIP 200 OK message 818 to the PBX 28 to accept the call from the mobile device 100, and a SIP 200 OK message 820 to the PBX 28 to accept the call from the remote party. The PBX 28 sends the appropriate connect messages 822 and 824 or signal via the PSTN to complete the circuit-switched calls with the remote party and the mobile device 100. Suitable ACK messages (not shown) from the PBX 28 to the enterprise voice application server 60 complete the two VoIP calls. As a result, the enterprise voice application server 60 has a first call set up with the mobile device 100 routed through the PBX 28 and PLMN 50, and a second call set up with the remote party routed through the PBX 28 and PSTN (not shown). Other networks may also be included in the circuit-switched paths, as will be appreciated.

The enterprise voice application server 60 then connect or bridges the two calls, as indicated by reference numeral 826, to complete the connection between the mobile device 100 and the remote party.

In another embodiment (not illustrated), the calls are terminated at the PBX 28 and are not routed through to the enterprise voice application server 60. Accordingly, the bridging of the two calls occurs at the PBX 28. In this embodiment, the enterprise voice application server 60 continues to manage the set-up and tear down of the calls and sends messages/signals to the PBX 28 instructing the PBX 28 to take particular actions, but the enterprise voice application server 60 does not actually handle the media streams.

Certain adaptations and modifications of the described embodiments can be made. Therefore, the above discussed embodiments are considered to be illustrative and not restrictive.

## Claims

1. A method of establishing a call between an enterprise-associated mobile device configured for wireless communications over a public land mobile network, PLMN, (50) (100) and a remote party through an enterprise communications system (80), the method comprising the steps of:
instructing the public land mobile network (50) to forward call requests addressed to the mobile device (100) to an associated enterprise phone number;
receiving, at the enterprise communications system (80), a request from the remote party to establish the call between the enterprise-associated mobile device (100) and the remote party;
determining, by the enterprise communications system, that the request comprises a forwarded call request addressed to the mobile device (100) and forwarded by the PLMN to the associated enterprise phone number; and
based on that determination, establishing a first call (92, 96) between the enterprise-associated mobile device (100) and the enterprise communications system (80), wherein when an absence of a VoIP-capable IP connection with the mobile device (100) is detected, establishing the first call includes:
sending a data message (810), for example a SMS message, from the enterprise communications system (80) to the mobile device (100) informing the mobile device (100) of the request from the remote party, wherein the data message is sent via the PLMN, whereby this data message is not a call set-up message of the PLMN; and
receiving, at the enterprise communications system (80), a circuit-switched voice call (814) via the public land mobile network (50) from the mobile device (100), the voice call being addressed to the enterprise communications system (80), in response to acceptance of the request by the user of the mobile device (100), wherein the voice call is placed automatically by the mobile device (100) in response to said acceptance.
establishing, by the enterprise communications system, a second call (90, 94) between the enterprise communications system (80) and the remote party, and bridging the first call (92, 96) and the second call (90, 94) at the enterprise communications system (80) to connect the enterprise-associated mobile device (100) and the remote party.

2. The method claimed in claim 1, wherein when a VoIP-capable IP connection with the mobile device (100) is detected, establishing the first call comprises establishing a VoIP call between the mobile device (100) and the enterprise communications system (80).

3. The method claimed in claims 1 or 2, wherein the enterprise communication system (80) comprises a private branch exchange "PBX" (28) and a enterprise voice application server (60) connected via a local network (20), and wherein the step of establishing the second call (90, 94) with the remote party includes completing a circuit-switched voice connection with the remote party through the public switched telephone network (40) via the PBX (28).

4. The method claimed in claim 3, wherein the first call and the second call are terminated at the PBX (28) and the step of bridging is performed by the PBX (28) under the control of the enterprise voice application server (60).

5. The method claimed in claim 3, wherein the first call and the second call are terminated at the enterprise voice application server (60) and the step of bridging is performed by the enterprise voice application server (60).

6. A system for establishing a call between an enterprise-associated mobile device and a remote party through an enterprise communications system (80), the mobile device (100) being configured for wireless communications over a public land mobile network (50), wherein the public land mobile network (50) is configured to be instructed to forward call requests addressed to the mobile device (100) to an associated enterprise phone number, the system comprising:
the mobile device (100), wherein the mobile device (100) comprises a communication application (102) configured to prevent alteration of the configuration of the public land mobile network (50) with regard to forwarding call requests addressed to the mobile device (100); and the enterprise communications system (80) comprising a enterprise voice application server (60) and a private branch exchange, PBX, (28), the enterprise communications system (80) being configured to receive a forwarded call request from the public land mobile network (50) and to determine that the forwarded call request addressed to the mobile device (100) comprises a call request addressed to the mobile device (100) but forwarded to the associated enterprise phone number and, based on that determination, to establish a first call (92, 96) between the mobile device (100) and the enterprise communications system (80), establish a second call (90, 94) between the enterprise communications system (80) and the remote party, and bridge the first call (92, 96) and the second call (90, 94) at the enterprise communications system (80) to connect the mobile device (100) and the remote party;
wherein the enterprise communications system (80) is configured, when it detects the absence of a VoIP-capable IP connection with the mobile device (100), to establish the first call by sending the mobile device a data message, for example a SMS, (810) via the PLMN, whereby this data message is not a call set-up message of the PLMN, informing the mobile device (100) of the request from the remote party, and
wherein the communication application (102) on the mobile device (100) is configured to output a user alert in response to the data message (810) regarding the request, receive a user input accepting the request, and, in response to the user input, automatically place a circuit-switched voice call (814) via the public land mobile network (50) addressed to the enterprise communications system (80).

7. The system claimed in claim 6, wherein the enterprise communications system (80) is configured to detect the presence of a VoIP-capable IP connection with the mobile device (100) and, if so detected, establish the first call as a VoIP call between the enterprise communication system (800 and the mobile device (100) over said IP connection.

8. The system claimed in claims 6 or 7, wherein the PBX (28) is configured to terminate the first call and the second call under the control of the enterprise voice application server (60) and wherein the PBX (28) includes a bridging agent (64) for bridging the first call and the second call.

9. The system claimed in claims 6 or 7, wherein the enterprise voice application server (60) includes a media processing component, and wherein the PBX (28) and the enterprise voice application server (60) are configured to establish one or more media paths between the PBX (28) and the enterprise voice application server (60) to terminate the first call and the second call at the media processing component of the enterprise voice application server (60), and wherein the enterprise voice application server (60) includes a bridging agent (64) for bridging the first call and the second call.

10. A computer program product comprising a machine-readable medium having encoded thereon computer-executable instructions for establishing a call between an enterprise-associated mobile device (100) configured for wireless communications over a public land mobile network, PLMN, (50) and a remote party through an enterprise communications system (80), the computer-executable instructions comprising:
instructions for instructing a public land mobile network (50) to forward call requests addressed to the mobile device (100) to an associated enterprise phone number;
instructions for receiving, at the enterprise communications system (80), a request from the remote party to establish the call between the enterprise-associated mobile device (100) and the remote party;
instructions for determining, by the enterprise communications system, that the request comprises a forwarded call request addressed to the mobile device (100) and forwarded to the associated enterprise phone number; and
instructions, executable in response to that determination, for establishing a first call (92, 96) between the enterprise-associated mobile device (100) and the enterprise communications system (80),
establishing a second call (90, 94) between the enterprise communications system (80) and the remote party, and bridging the first call (92, 96) and the second call (90, 94) at the
enterprise communications system (80) to connect the enterprise-associated mobile device (100) and the remote party;
wherein the instructions for establishing the first call include instructions for detecting an absence of a VoIP-capable IP connection with the mobile device (100) and, if the absence is detected, sending, by the enterprise communications system, the mobile device a data message (810), for example a SMS, via the PLMN, whereby this data message is not a voice call set-up message of the PLMN, informing the mobile device (100) of the request from the remote party, and instructions for receiving, at the enterprise communications system, a circuit-switched voice call via the PLMN from the mobile device, the voice call being addressed to the enterprise communications system, in response to acceptance of the request by the user of the mobile device, wherein the voice call is placed automatically by the mobile device in response to said acceptance.

## Patentansprüche

1. Verfahren zum Aufbauen eines Anrufs zwischen einer einem Unternehmen zugeordneten Mobilfunkvorrichtung, die für drahtlose Kommunikationen über ein öffentliches landgestütztes Mobilfunknetz, PLNM, (50) (100) konfiguriert ist, und einem entfernten Teilnehmer über ein Unternehmenskommunikationssystem (80), wobei das Verfahren die folgenden Schritte umfasst:
Anweisen des öffentlichen landgestützten Mobilfunknetzes (50), Anrufanforderungen, die an die Mobilfunkvorrichtung (100) adressiert sind, an eine zugeordnete Unternehmenstelephonnummer weiterzuleiten;
Empfangen einer Anforderung von dem entfernten Teilnehmer zum Aufbauen des Anrufs zwischen der dem Unternehmen zugeordneten Mobilfunkvorrichtung (100) und dem entfernten Teilnehmer bei dem Unternehmenskommunikationssystem (80);
Bestimmen, dass die Anforderung eine weitergeleitete Anrufsanforderung, die an die Mobilfunkvorrichtung (100) adressiert ist und durch das PLMN an die zugeordnete Unternehmenstelephonnummer weitergeleitet wird, umfasst, durch das Unternehmenskommunikationssystem; und
auf der Grundlage dieser Bestimmung,
Aufbauen eines ersten Anrufs (92, 96) zwischen der dem Unternehmen zugeordneten Mobilfunkvorrichtung (100) und dem Unternehmenskommunikationssystem (80), wobei das Aufbauen des ersten Anrufs, wenn eine Abwesenheit einer VoIP-fähigen IP-Verbindung mit der Mobilfunkvorrichtung (100) detektiert wird, enthält:
Senden einer Datennachricht (810), z. B. einer SMS-Nachricht, von dem Unternehmenskommunikationssystem (80) an die Mobilfunkvorrichtung (100), die die Mobilfunkvorrichtung (100) über die Anforderung von dem entfernten Teilnehmer informiert, wobei die Datennachricht über das PLMN gesendet wird, wobei diese Datennachricht keine Rufaufbaunachricht des PLMN ist;
Empfangen eines leitungsvermittelten Sprachanrufs (814) von der Mobilfunkrichtung (100) über das öffentliche landgestützte Mobilfunknetz (50) bei dem
Unternehmenskommunikationssystem (80), wobei der Sprachanruf an das Unternehmenskommunikationssystem (80) adressiert ist, in Reaktion auf die Annahme der Anforderung durch den Nutzer der Mobilfunkvorrichtung (100), wobei der Sprachanruf durch die Mobilfunkvorrichtung (100) in Reaktion auf die Annahme automatisch getätigt wird,
Aufbauen eines zweiten Anrufs (90, 94) zwischen dem Unternehmenskommunikationssystem (80) und dem entfernten Teilnehmer durch das Unternehmenskommunikationssystem, und
Überbrücken des ersten Anrufs (92, 96) und des zweiten Anrufs (90, 94) bei dem Unternehmenskommunikationssystem (80), um die dem Unternehmen zugeordnete Mobilfunkvorrichtung (100) und den entfernten Teilnehmer zu verbinden.

2. Verfahren nach Anspruch 1, wobei das Aufbauen des ersten Anrufs das Aufbauen eines VoIP-Anrufs zwischen der Mobilfunkvorrichtung (100) und dem Unternehmenskommunikationssystem (80) umfasst, wenn eine VoIP-fähige IP-Verbindung mit der Mobilfunkvorrichtung (100) detektiert wird.

3. Verfahren nach Anspruch 1 oder 2, wobei das Unternehmenskommunikationssystem (80) eine Nebenstellenanlage "PBX" (28) und einen Unternehmenssprachanwendungsserver (60), die über ein lokales Netz (20) verbunden sind, umfasst, und wobei der Schritt des Aufbauens des zweiten Anrufs (90, 94) mit dem entfernten Teilnehmer das Herstellen einer leitungsvermittelten Sprachverbindung mit dem entfernten Teilnehmer über das öffentliche leitungsvermittelte Telephonnetz (40) über die PBX (28) enthält.

4. Verfahren nach Anspruch 3, wobei der erste Anruf und der zweite Anruf bei der PBX (28) abgeschlossen werden und wobei der Schritt des Überbrückens durch die PBX (28) gemäß der Steuerung des Unternehmenssprachanwendungsservers (60) ausgeführt wird.

5. Verfahren nach Anspruch 3, wobei der erste Anruf und der zweite Anruf bei dem Unternehmenssprachanwendungsserver (60) abgeschlossen werden und wobei der Schritt des Überbrückens durch den Unternehmenssprachanwendungsserver (60) ausgeführt wird.

6. System zum Aufbauen eines Anrufs zwischen einer einem Unternehmen zugeordneten Mobilfunkvorrichtung und einem entfernten Teilnehmer über ein Unternehmenskommunikationssystem (80), wobei die Mobilfunkvorrichtung (100) für drahtlose Kommunikationen über ein öffentliches landgestütztes Mobilfunknetz (50) konfiguriert ist, wobei das öffentliche landgestützte Mobilfunknetz (50) dafür konfiguriert ist, angewiesen zu werden, an die Mobilfunkvorrichtung (100) adressierte Anrufanforderungen an eine zugeordnete Unternehmenstelephonnummer weiterzuleiten, wobei das System umfasst:
die Mobilfunkvorrichtung (100), wobei die Mobilfunkvorrichtung (100) eine Kommunikationsanwendung (102), die dafür konfiguriert ist, eine Änderung der Konfiguration des öffentlichen landgestützten Mobilfunknetzes (50) hinsichtlich der Weiterleitung an die Mobilfunkvorrichtung (100) adressierter Anrufanforderungen zu verhindern, umfasst; und
das Unternehmenskommunikationssystem (80), das einen Unternehmenssprachanwendungsserver (60) und eine Nebenstellenanlage, PBX, (28) umfasst, wobei das Unternehmenskommunikationssystem (80) dafür konfiguriert ist, eine weitergeleitete Anrufanforderung von dem öffentlichen landgestützten Mobilfunknetz (50) zu empfangen und zu bestimmen, dass die an die Mobilfunkvorrichtung (100) adressierte weitergeleitete Anrufanforderung eine an die Mobilfunkvorrichtung (100) adressierte Anrufanforderung umfasst, die aber an die zugeordnete Unternehmenstelephonnummer weitergeleitet wird, und auf der Grundlage der Bestimmung:
zwischen der Mobilfunkvorrichtung (100) und dem Unternehmenskommunikationssystem (80) einen ersten Anruf (92, 96) aufzubauen,
zwischen dem Unternehmenskommunikationssystem (80) und dem entfernten Teilnehmer einen zweiten Anruf (90, 94) aufzubauen, und
den ersten Anruf (92, 96) und den zweiten Anruf (90, 94) bei dem Unternehmenskommunikationssystem (80) zu überbrücken, um die Mobilfunkvorrichtung (100) und den entfernten Teilnehmer zu verbinden;
wobei das Unternehmenskommunikationssystem (80) dafür konfiguriert ist, wenn es die Abwesenheit einer VoIP-fähigen IP-Verbindung mit der Mobilfunkvorrichtung (100) detektiert, durch Senden einer Datennachricht, z. B. einer SMS, (810) über das PLMN an die Mobilfunkvorrichtung den ersten Anruf aufzubauen, wobei diese Datennachricht keine Rufaufbaunachricht des PLMN ist, wobei sie die Mobilfunkvorrichtung (100) über die Anorderung von dem entfernten Teilnehmer informiert, und
wobei die Kommunikationsanwendung (102) in der Mobilfunkvorrichtung (100) dafür konfiguriert ist, in Reaktion auf die Datennachricht (810) hinsichtlich der Anforderung einen Nutzeralarm auszugeben, eine Nutzereingabe zu empfangen, die die Anforderung annimmt, und in Reaktion auf die Nutzereingabe automatisch über das öffentliche landgestützte Mobilfunknetz (50) einen leitungsvermittelten Sprachanruf (814) zu tätigen, der an das Unternehmenskommunikationssystem (80) adressiert ist.

7. System nach Anspruch 6, wobei das Unternehmenskommunikationssystem (80) dafür konfiguriert ist, die Anwesenheit einer VoIP-fähigen IP-Verbindung mit der Mobilfunkvorrichtung (100) zu detektieren und, falls sie detektiert wird, den ersten Anruf als einen VoIP-Anruf zwischen dem Unternehmenskommunikationssystem (800) und der Mobilfunkvorrichtung (100) über die IP-Verbindung aufzubauen.

8. System nach Anspruch 6 oder 7, wobei die PBX (28) dafür konfiguriert ist, den ersten Anruf und den zweiten Anruf gemäß der Steuerung des Unternehmenssprachanwendungsservers (60) abzuschließen, und wobei die PBX (28) einen Überbrückungsagenten (64) zum Überbrücken des ersten Anrufs und des zweiten Anrufs enthält.

9. System nach Anspruch 6 oder 7, wobei der Unternehmenssprachanwendungsserver (60) eine Medienverarbeitungskomponente enthält und wobei die PBX (28) und der Unternehmenssprachanwendungsserver (60) dafür konfiguriert sind, einen oder mehrere Medienwege zwischen der PBX (28) und dem Unternehmenssprachanwendungsserver (60) aufzubauen, um den ersten Anruf und den zweiten Anruf bei der Medienverarbeitungskomponente des Unternehmenssprachanwendungsservers (60) abzuschließen, und wobei der Unternehmenssprachanwendungsserver (60) einen Überbrückungsagenten (64) zum Überbrücken des ersten Anrufs und des zweiten Anrufs enthält.

10. Computerprogrammprodukt, das ein maschinenlesbares Medium umfasst, auf dem durch einen Computer ausführbare Anweisungen codiert sind, um zwischen einer einem Unternehmen zugeordneten Mobilfunkvorrichtung (100), die für drahtlose Kommunikationen über ein öffentliches landgestütztes Mobilfunknetz, PLMN, (50) konfiguriert ist, und einem entfernten Teilnehmer über ein Unternehmenskommunikationssystem (80) einen Anruf aufzubauen, wobei die durch einen Computer ausführbaren Anweisungen umfassen:
Anweisungen, um ein öffentliches landgestütztes Mobilfunknetz (50) anzuweisen, an die Mobilfunkvorrichtung (100) adressierte Anrufanforderungen an eine zugeordnete Unternehmenstelephonnummer weiterzuleiten;
Anweisungen, um bei dem Unternehmenskommunikationssystem (80) eine Anforderung von dem entfernten Teilnehmer zum Aufbauen des Anrufs zwischen der dem Unternehmen zugeordneten Mobilfunkvorrichtung (100) und dem entfernten Teilnehmer zu empfangen;
Anweisungen, um durch das Unternehmenskommunikationssystem zu bestimmen, dass die Anweisung eine weitergeleitete Anrufanforderung umfasst, die an die Mobilfunkvorrichtung (100) adressiert ist und an die zugeordnete Unternehmenstelephonnummer weitergeleitet wird; und
Anweisungen, die in Reaktion auf diese Bestimmung ausführbar sind, um
zwischen der dem Unternehmen zugeordneten Mobilfunkvorrichtung (100) und dem Unternehmenskommunikationssystem (80) einen ersten Anruf (92, 96) aufzubauen,
zwischen dem Unternehmenskommunikationssystem (80) und dem entfernten Teilnehmer einen zweiten Anruf (90, 94) aufzubauen, und
den ersten Anruf (92, 96) und den zweiten Anruf (90, 94) bei dem Unternehmenskommunikationssystem (80) zu überbrücken, um die dem Unternehmen zugeordnete Mobilfunkvorrichtung (100) und den entfernten Teilnehmer zu verbinden;
wobei die Anweisungen zum Aufbauen des ersten Anrufs Anweisungen zum Detektieren einer Abwesenheit einer VoIP-fähigen IP-Verbindung mit der Mobilfunkvorrichtung (100) und, falls die Abwesenheit detektiert wird, zum Senden einer Datennachricht (810), z. B. einer SMS, über das PLMN an die Mobilfunkvorrichtung durch das Unternehmenskommunikationssystem, wobei diese Datennachricht keine Sprachanrufaufbaunachricht des PLMN ist, wobei sie die Mobilfunkvorrichtung (100) über die Anforderung von dem entfernten Teilnehmer informiert, und Anweisungen zum Empfangen eines leitungsermittelten Sprachanrufs über das PLMN von der Mobilfunkvorrichtung bei dem Unternehmenskommunikationssystem, wobei der Sprachanruf an das Unternehmenskommunikationssystem adressiert ist, in Reaktion auf die Annahme der Anforderung durch den Nutzer der Mobilfunkvorrichtung, wobei der Sprachanruf durch die Mobilfunkvorrichtung in Reaktion auf die Annahme automatisch getätigt wird, enthalten.

## Revendications

1. Procédé d'établissement d'un appel entre un dispositif mobile associé à une entreprise (100), configuré pour effectuer des communications sans fil sur un réseau mobile public terrestre, RMPT, (50) et un interlocuteur distant, via un système de communication d'entreprise (80), le procédé comprenant les étapes consistant à :
ordonner au réseau mobile public terrestre (50) de réacheminer les demandes d'appel adressées au dispositif mobile (100) vers un numéro de téléphone d'entreprise qui lui est associé ;
recevoir sur le système de communication d'entreprise (80) une demande provenant de l'interlocuteur distant afin d'établir l'appel entre le dispositif mobile associé à l'entreprise (100) et l'interlocuteur distant ;
déterminer par le système de communication d'entreprise que la demande consiste en une demande d'appel réacheminée adressée au dispositif mobile (100) et réacheminée par le RMPT au numéro de téléphone d'entreprise qui lui est associé ; et
en fonction de cette détermination :
établir un premier appel (92, 96) entre le dispositif mobile associé à l'entreprise (100) et le système de communication d'entreprise (80), dans lequel, lorsqu'une absence de connexion IP permettant la VoIP avec le dispositif mobile (100) est détectée, l'étape d'établissement du premier appel comprend les étapes consistant à :
envoyer un message de données (810), par exemple un message SMS, entre le système de communication d'entreprise (80) et le dispositif mobile (100) ;
informer le dispositif mobile (100) de la demande provenant de l'interlocuteur distant, le message de données étant envoyé via le RMPT et ce message de données n'étant pas un message d'établissement du RMPT ;
recevoir sur le système de communication d'entreprise (80) un appel vocal à commutation de circuit (814) via le réseau mobile public terrestre (50) en provenance du dispositif mobile (100), l'appel vocal étant adressé au système de communication d'entreprise (80), en réponse à l'acceptation de la demande par l'utilisateur du dispositif mobile (100), l'appel vocal étant placé automatiquement par le dispositif mobile (100) en réponse à ladite acceptation ;
établir par le système de communication d'entreprise un second appel (90, 94) entre le système de communication d'entreprise (80) et l'interlocuteur distant ; et
établir un pontage entre le premier appel (92, 96) et le second appel (90, 94) sur le système de communication d'entreprise (80) pour connecter le dispositif mobile associé à l'entreprise (100) et l'interlocuteur distant.

2. Procédé selon la revendication 1, dans lequel, lorsqu'une connexion IP permettant la VoIP avec le dispositif mobile (100) est détectée, l'étape d'établissement du premier appel comprend l'étape consistant à établir un appel VoIP entre le dispositif mobile (100) et le système de communication d'entreprise (80).

3. Procédé selon la revendication 1 ou 2, dans lequel le système de communication d'entreprise (80) comprend un central téléphonique privé (28) et un serveur d'applications vocales d'entreprise (60) connecté via un réseau local (20) et dans lequel l'étape d'établissement du second appel (90, 94) avec l'interlocuteur distant comprend l'achèvement d'une connexion vocale à commutation de circuit avec l'interlocuteur distant sur le réseau mobile public terrestre (40), via le central téléphonique privé (28).

4. Procédé selon la revendication 3, dans lequel le premier appel et le second appel se terminent au central téléphonique privé (28) et l'étape de pontage est effectuée par le central téléphonique privé (28), commandé par le serveur d'applications vocales d'entreprise (60).

5. Procédé selon la revendication 3, dans lequel le premier appel et le second appel se terminent au serveur d'applications vocales d'entreprise (60) et l'étape de pontage est effectuée par le central téléphonique privé (28), commandé par le serveur d'applications vocales d'entreprise (60).

6. Système destiné à établir un appel entre un dispositif mobile associé à une entreprise et un interlocuteur distant, via un système de communication d'entreprise (80), le dispositif mobile (100) étant configuré pour effectuer des communications sans fil via un réseau mobile public terrestre (50), dans lequel le réseau mobile public terrestre (50) est configuré pour qu'on lui commande de réacheminer les demandes d'appel adressées au dispositif mobile (100) vers un numéro de téléphone d'entreprise qui lui est associé, le système comprenant :
le dispositif mobile (100), ledit dispositif mobile (100) comprenant une application de communication (102) configurée pour empêcher une altération de la configuration du réseau mobile public terrestre (50) en ce qui concerne le réacheminement des demandes d'appel adressées au dispositif mobile (100) ; et
le système de communication d'entreprise (80) comprenant un serveur d'applications vocales d'entreprise (60) et un central téléphonique privé (28), le système de communication d'entreprise (80) étant configuré pour recevoir une demande d'appel réacheminée provenant du réseau mobile public terrestre (50) et pour déterminer que la demande d'appel réacheminée adressée au dispositif mobile (100) consiste en une demande d'appel adressée au dispositif mobile (100) mais réacheminée au numéro de téléphone associé à l'entreprise et, en fonction de cette détermination, pour :
établir un premier appel (92, 96) entre le dispositif mobile associé à l'entreprise (100) et le système de communication d'entreprise (80) ;
établir un second appel (90, 94) entre le système de communication d'entreprise (80) et l'interlocuteur distant ; et
établir un pontage entre le premier appel (92, 96) et le second appel (90, 94) sur le système de communication d'entreprise (80) pour connecter le dispositif mobile associé à l'entreprise (100) et l'interlocuteur distant ;
dans lequel le système de communication d'entreprise (80), lorsqu'il détecte une absence de connexion IP permettant la VoIP avec le dispositif mobile (100), est configuré pour établir le premier appel en envoyant au dispositif mobile un message de données (810), par exemple un message SMS, via le RMPT, ce message de données n'étant pas un message d'établissement du RMPT, pour informer le dispositif mobile (100) de la demande provenant de l'interlocuteur distant ; et
dans lequel l'application de communication (102) sur le dispositif mobile (100) est configurée pour produire en sortie une alerte destinée à l'utilisateur en réponse au message de données (810) intéressant la demande, pour recevoir une saisie de l'utilisateur acceptant la demande et, à la suite de la saisie de l'utilisateur, pour placer automatiquement un appel vocal à commutation de circuit (814) via le réseau mobile public terrestre (50), adressé au système de communication d'entreprise (80).

7. Système selon la revendication 6, dans lequel le système de communication d'entreprise (80) est configuré pour détecter la présence d'une connexion IP permettant la VoIP avec le dispositif mobile (100) et, si celle-ci est détectée, pour établir le premier appel sous la forme d'un appel VoIP entre le système de communication d'entreprise (80) et le dispositif mobile (100) sur ladite connexion IP.

8. Système selon la revendication 6 ou 7, dans lequel le central téléphonique privé (28) est configuré pour terminer le premier appel et le second appel en étant commandé par le serveur d'applications vocales d'entreprise (60) et dans lequel le central téléphonique privé (28) comprend un agent de pontage (64) pour établir le pontage entre le premier appel et le second appel.

9. Système selon la revendication 6 ou 7, dans lequel le serveur d'applications vocales d'entreprise (60) comprend un composant de traitement multimédia et dans lequel le central téléphonique privé (28) et le serveur d'applications vocales d'entreprise (60) sont configurés pour établir un ou plusieurs trajets multimédias entre le central téléphonique privé (28) et le serveur d'applications vocales d'entreprise (60) afin de terminer le premier appel et le second appel au niveau du composant de traitement multimédia du serveur d'applications vocales d'entreprise (60) et dans lequel le serveur d'applications vocales d'entreprise (60) comprend un agent de pontage (64) pour établir le pontage entre le premier appel et le second appel.

10. Produit programme d'ordinateur comprenant un support lisible par la machine portant encodées des instructions exécutables par ordinateur afin d'établir un appel entre un dispositif mobile associé à une entreprise (100), configuré pour effectuer des communications sans fil sur un réseau mobile public terrestre, RMPT, (50) et un interlocuteur distant, via un système de communication d'entreprise (80), les instructions exécutables par ordinateur comprenant :
des instructions destinées à ordonner à un réseau mobile public terrestre (50) de réacheminer les demandes d'appel adressées au dispositif mobile (100) vers un numéro de téléphone d'entreprise qui lui est associé ;
des instructions destinées à recevoir sur le système de communication d'entreprise (80) une demande provenant de l'interlocuteur distant afin d'établir l'appel entre le dispositif mobile associé à l'entreprise (100) et l'interlocuteur distant ;
des instructions destinées à déterminer par le système de communication d'entreprise que la demande consiste en une demande d'appel réacheminée adressée au dispositif mobile (100) et réacheminée par le RMPT vers le numéro de téléphone d'entreprise qui lui est associé ; et
des instructions qui, en fonction de cette détermination, sont destinées à :
établir un premier appel (92, 96) entre le dispositif mobile associé à l'entreprise (100) et le système de communication d'entreprise (80) ;
établir un second appel (90, 94) entre le système de communication d'entreprise (80) et l'interlocuteur distant ; et
établir un pontage entre le premier appel (92, 96) et le second appel (90, 94) au niveau du système de communication d'entreprise (80) afin de connecter le dispositif mobile associé à l'entreprise (100) et l'interlocuteur distant ;
dans lequel les instructions destinées à établir le premier appel comprennent des instructions destinées à détecter une absence de connexion IP permettant la VoIP avec le dispositif mobile (100) et, si cette absence est détectée, à envoyer par le système de communication d'entreprise un message de données (810) au dispositif mobile, par exemple un message SMS, via le RMPT, ledit message de données n'étant pas un message d'établissement du RMPT, pour informer le dispositif mobile (100) de la demande émanant de l'interlocuteur distant et des instructions destinées à recevoir sur le système de communication d'entreprise un appel vocal à commutation de circuit (814) via le RMPT en provenance du dispositif mobile (100), l'appel vocal étant adressé au système de communication d'entreprise, en réponse à l'acceptation de la demande par l'utilisateur du dispositif mobile, l'appel vocal étant placé automatiquement par le dispositif mobile en réponse à ladite acceptation.
